# FASCICULE DE BREVET EUROPEEN

(11) **EP 0 357 529 B1**
(45) Date de publication et mention de la délivrance du brevet: **10.08.1994**
(21) Numéro de dépôt: 89440049.8
(22) Date de dépôt: 02.06.1989
(51) Int. Cl.: B65G 47/68

(54) **Aligneur sans pression d'objects divers et notamment de bouteilles**
Vorrichtung zum drucklosen Ausrichten von verschiedenen Gegenständen, insbesondere von Flaschen
No-pressure aligner for different items,in particular for bottles

(30) Priorité: 07.06.1988 FR 8807737
(43) Date de publication de la demande: 07.03.1990
(73) Titulaire: GEBO INDUSTRIES (Société Anonyme), F-67117 Reichstett (FR)
(72) Inventeur: Schoen, Pierre, F-67550 Eckwersheim (FR)
(74) Mandataire: Aubertin, François

(56) Documents cités:
- DE-U- 8 500 522
- DE-U- 8 706 712
- FR-A- 2 533 200
- FR-A- 2 607 123
- GB-A- 2 178 389

## Description

L'invention concerne un aligneur sans pression d'objets divers tels que des bouteilles comportant un transporteur d'alimentation à voie multiple, un transporteur intermédiaire formé d'une pluralité de chaînes à palettes juxtaposées et surmontées d'une rampe de guidage curviligne et un convoyeur de sortie à voie unique.

L'invention concerne, plus particulièrement, l'industrie spécialisée dans le domaine du convoyage d'objets divers et, notamment, de bouteilles.

Il est connu d'utiliser des convoyeurs, dénommés aligneurs sans pression, pour rétrécir un flot d'objets répartis sur un transporteur de largeur importante, de manière à les canaliser sous forme de fil unique en direction d'une unité de traitement quelconque.

Ainsi, dans le domaine du convoyage de récipients et, plus particulièrement, de bouteilles, de tels aligneurs sont disposés en amont de machines telles que soutireuses, étiquetteuses, unités de capsulage ou autres, afin d'assurer l'alimentation de ces dernières, en bouteilles arrivant l'une derrière l'autre.

Habituellement, ces aligneurs sans pression sont formés par un transporteur d' alimentation à voie multiple sur lequel se déplacent, à vitesse réduite, les bouteilles disposées en vrac. Ce transporteur d'alimentation débouche sur un transporteur intermédiaire composé de plusieurs chaînes à palettes élémentaires disposées côte à côte et surmontées d'une rampe de guidage curviligne repoussant, transversalement, lesdites bouteilles d'une chaîne à palette élémentaire sur la suivante. Chacune des voies de ce transporteur intermédiaire est animée d'une vitesse de défilement différente, croissante selon une direction transversale au sens d'avance des bouteilles, de manière à accélérer ces dernières progressivement et réduire la largeur du flot arrivant du transporteur d' alimentation.

En sortie de ce transporteur intermédiaire, il est impératif que les différentes bouteilles se présentent en une file unique avant d'emprunter un transporteur de sortie réduit à une seule voie. En effet, au cas où deux bouteilles venaient à se présenter côte à côte à l'entrée de ce convoyeur de sortie, elles pourraient en obturer le passage créant une rupture dans l'alimentation des bouteilles et, finalement, l'arrêt momentané de l'installation. Il se peut, aussi, que l'une ou l'autre de ces bouteilles soit évacuée du convoyeur et tombe, dans ce cas, dans un bac de récupération adjacent. Ceci nécessite l'intervention fréquente d'un opérateur pour réintroduire les bouteilles stockées dans le bac de récupération sur le circuit d'alimentation. Toutefois, le résultat le plus fréquent est l'éclatement de l'une et/ou l'autre de ces bouteilles se présentant en double file sous l'effet de la poussée des bouteilles suivantes. Il en résulte, bien entendu, des projections de verre particulièrement dangereuses pour le personnel situé à proximité. De plus, les débris de verre restant sur le convoyeur de sortie peuvent provoquer l'arrêt de l'unité de traitement situé en aval ou encore induire en erreur les détecteurs mécaniques ou optiques placés sur le convoyeur et dont l'information est restituée à une unité de régulation de l'installation.

Une première solution, réduisant les risques précités, consiste à prolonger considérablement la longueur du convoyeur intermédiaire de sorte que la probabilité qu'une bouteille se présente en double file à l'entrée du convoyeur de sortie soit approximativement nulle.

Or, la tendance actuelle consiste, justement, à réduire au minimum l'encombrement de ce type de convoyeur de transition, de manière à diminuer la taille des installations et, finalement, des locaux servant à les abriter.

On connaît également, par le document FR-A-2.533.200 des aligneurs sans pression de conception sensiblement identique à celle décrite ci-dessus et comportant un transporteur d'alimentation, un transporteur intermédiaire et un transporteur de sortie à voie unique. Dans ce cas précis, le transporteur intermédiaire est incliné transversalement par rapport à l'avance des bouteilles, d'un angle d'environ 5° à 8°. Ainsi, le flot de bouteilles arrivant par le convoyeur d'alimentation débouche dans la partie basse sur le convoyeur intermédiaire et progresse, sous l'effet de l'avance des chaînes à palettes, le long de la rampe de guidage les repoussant dans la partie haute aboutant au transporteur de sortie à voie unique.

L'influence de l'inclinaison transversale facilite, d'une part, l'alignement des bouteilles et l'évacuation des débris de verre ou des bouteilles couchées, éventuellement, disposées sur ce transporteur intermédiaire. Il n'en reste pas moins que les risques de bouteilles en double file persistent et que la longueur de cet aligneur sans pression est maintenue conséquente.

Bien entendu, l'alignement des bouteilles obtenu sous l'effet d'une pression quelconque est à proscrire car il est générateur de bruit et d'un accroissement de bouteilles cassées sous l'effet d'entrechoquements fréquents.

Par ailleurs, on connaît, par le document GB-A-2.178.389, un aligneur sans pression de récipients, notamment de bouteilles, comprenant un transporteur d'alimentation à voies multiples débouchant sur un transporteur intermédiaire constitué par une juxtaposition de chaînes à palettes animées d'un gradient de vitesse progressivement croissant, et d'un transporteur de sortie à voie unique. De manière à faciliter l'implantation de cet aligneur sans pression de récipients dans le cas d'une installation complète d'embouteillage ou analogue, le transporteur intermédiaire est subdivisé en deux tronçons reliés au moyen d'un transporteur de transition. Plus précisément, sur le premier tronçon du transporteur intermédiaire, la rampe de guidage surmontant les chaînes à palettes juxtaposées communique aux récipients une trajectoire à composante transversale de direction opposée à la composante transversale communiquée par la rampe de guidage aux récipients sur le second tronçon.

Le transporteur de transition reliant les deux tronçons du transporteur intermédiaire peut adopter une trajectoire courbe de sorte que le second tronçon n'est pas situé, obligatoirement, dans le prolongement du premier tronçon. Il est fait observer qu'un tel transporteur de transition courbe peut contribuer à l'alignement des récipients sous l'effet de la force centrifuge qui en résulte. A noter que, de part et d'autre de ce transporteur de transition, comportant plusieurs voies, sont aménagées des rampes de guidage constituant le prolongement de la rampe de guidage surmontant, selon le cas, le premier tronçon ou le second tronçon du transporteur intermédiaire.

En fait, la présente invention a pour but de remédier à l'ensemble des inconvénients précités. L'invention, telle qu'elle est caractérisée dans les revendications, résout le problème et consiste en un aligneur sans pression d'objets divers, tels que des bouteilles, comportant un transporteur d'alimentation à voies multiples, un transporteur intermédiaire formé d'une pluralité de chaînes à palettes élémentaires juxtaposées et surmontées d'une rampe de guidage curviligne et un transporteur de sortie à voie unique, ledit transporteur intermédiaire débouchant sur un transporteur de transition à trajectoire courbe et à deux voies au moins, ce transporteur de transition étant disposé en amont du transporteur de sortie et surmonté par une rampe de guidage curviligne reprenant le guidage des bouteilles sur leur côté opposé par rapport au guidage s'effectuant sur le transporteur intermédiaire, ceci sensiblement au milieu et à l'extérieur du virage défini par le transporteur de transition, à l'extrémité aval dudit transporteur intermédiaire.

Les avantages obtenus grâce à cette invention consistent, essentiellement, en ce que la trajectoire courbe conférée à cet aligneur sans pression permet, d'une part, d'assurer un parfait alignement des bouteilles, éventuellement encore en double file, et, d'autre part, de réduire, considérablement, son encombrement général.

L'invention est exposée, ci-après, plus en détail à l'aide de dessins représentant, seulement, un mode d'exécution.
- la figure 1 représente une vue schématisée et en plan d'un aligneur sans pression conforme à l'invention et réalisé selon un premier mode d'exécution ;
- la figure 2 représente une vue schématisée et en plan de l'aligneur sans pression adoptant une disposition différente ;
- la figure 3 représente schématiquement et en plan l'aligneur sans pression réalisé selon un autre mode d'exécution.

L'aligneur sans pression 1, conforme à l'invention, et représenté dans les différentes figures, est destiné au convoyage d'objets divers entre deux unités de traitement distinctes, dont l'une est située en amont et l'autre en aval de la chaîne de fabrication.

En règle générale, ces unités de traitement fonctionnent suivant des rythmes de production différents imposant la formation d'un stock tampon sur le convoyeur assurant leur liaison. Habituellement, ceci consiste à ralentir et répartir les objets sortant avec un pas régulier de la machine de traitement située en amont, sur un transporteur multivoies. Finalement, le flot de bouteilles ainsi constitué doit, à nouveau, être rétréci de manière à alimenter la machine de traitement, située en aval, d'objets arrivant sur une file unique.

A cet effet, on utilise un aligneur d'objets dont l'encombrement doit être réduit au minimum de manière à diminuer la taille des installations de production.

Toutefois, au cas où les objets véhiculés sont relativement fragiles, il est nécessaire d'utiliser un aligneur sans pression ayant la propriété de ramener lesdits objets en une file unique, sans que ceux-ci exercent une poussée importante les uns sur les autres.

Cette caractéristique est indispensable, notamment, dans le cadre de transport de récipients tels que des bouteilles. En effet, en cas d'alignement effectué sous pression, le verre constituant, généralement, ces bouteilles est mis à rude épreuve et, en outre, est générateur de bruit particulièrement gênant pour le personnel.

Ainsi, la présente description se réfère à un aligneur sans pression dans le cadre d'une application au transport des bouteilles, toutefois, il trouvera également, son utilité pour véhiculer des objets de formes, de dimensions et de nature différents.

Plus précisément, cet aligneur sans pression 1, conforme à l'invention, comporte un transporteur d'alimentation 2 pourvu d'une pluralité de voies 3, 4, 5, disposées côte à côte et animées d'une vitesse d'avance identique. Ce transporteur d'alimentation 2 débouche sur un transporteur intermédiaire 6 à voie multiple servant à accélérer et à rétrécir le flot de bouteilles 7 provenant dudit transporteur d'alimentation 2.

Le transporteur intermédiaire 6 est formé de plusieurs chaînes à palettes élémentaires 8, 9 ... juxtaposées et animées, chacune, d'une vitesse d'avance différente, croissante transversalement par rapport au sens d'avance 10 des bouteilles 11. Cette disposition est particulièrement connue par l'Homme du Métier et il lui sera aisé de déterminer le gradient des vitesses en fonction du type d'objets véhiculés et notamment, du poids des bouteilles et de leur dimension en général. De même, l'entraînement de ces chaînes à palettes élémentaires 8, 9 à des vitesses différentielles se fait par l'intermédiaire de moyens moteurs 12 et de transmission 13 connus en soi.

Ce transporteur intermédiaire 6 est surmonté d'une rampe de guidage 14, de forme curviligne, permettant de repousser, progressivement, les bouteilles 11, arrivant, du transporteur d'alimentation 3, depuis les voies, animées d'une vitesse lente, en direction des voies soumises à un défilement plus rapide. Il en résulte une accélération progressive des bouteilles 11 et un rétrécissement du flot 7 arrivant à l'entrée du transporteur intermédiaire 6.

En sortie de ce dernier, les bouteilles 11 sont pratiquement alignées les unes derrière les autres, avec de temps à autre, une bouteille 15 maintenue en double file. L'alignement de ces dernières, effectué selon un procédé identique à celui appliqué au rétrécissement du flot de bouteilles 7, imposerait un rallongement supplémentaire important du transporteur intermédiaire 6, sans que, pour autant, le résultant ne soit garanti à cent pour cent.

Avantageusement et selon une caractéristique de la présente invention, ce transporteur intermédiaire 6 débouche sur un transporteur de transition à trajectoire courbe 16 muni de moyens 17 pour aligner ces bouteilles 15 maintenues en double file.

Ces moyens 17 sont constitués par une rampe de guidage curviligne 18 surmontant le transporteur de transition 16 et reprenant le guidage des bouteilles 11 et 15, sensiblement en milieu et à l'extérieur du virage 19 aboutant à l'extrémité avale 20 du transporteur intermédiaire 6. En fait, cette reprise par la rampe de guidage 18 des bouteilles 11 et 15 s'effectue sur leur côté opposé par rapport au guidage ayant eu lieu sur ledit transporteur intermédiaire 6 au moyen de la rampe 14 surmontant ce dernier. Cette disposition particulière a pour conséquence d'augmenter, légèrement, les forces de frottement appliquées aux bouteilles en double file 15 de manière à les repousser entre deux bouteilles 11 alignées véhiculées librement sur le transporteur de transition 16. Préférentiellement, l'extrémité amont 27 de cette rampe de guidage 18 est, sensiblement, recourbée vers l'extérieur du virage 19 de sorte que les bouteilles non alignées 15 ne butent pas contre le chant 28 de ladite rampe de guidage 18.

L'avantage obtenu grâce à cette caractéristique de l'aligneur sans pression 1, conforme à l'invention, consiste en ce que sa longeur totale 21 est sensiblement inférieure aux aligneurs sans pression connus jusqu'ici, tout en garantissant un alignement parfait des bouteilles. Il en résulte, bien évidemment, un encombrement plus réduit. L'adjonction d'un transporteur courbe offre, par ailleurs, la possibilité de moduler, aisément, la configuration de l'aligneur sans pression, de manière à l'intégrer sans grande difficulté dans tout type d'installation. Cette particularité sera détaillée, plus en avant dans la description.

Etant donné que ce transporteur de transition 16 est, nécessairement, de type multivoie, comportant un nombre de chaînes à palettes élémentaires 22, 23 compris entre 2 et 4, il est nécessaire d'assurer l'orientation des bouteilles en direction d'un transporteur de sortie à voie unique 24 aboutant à l'extrémité avale 25 dudit transporteur de transition 16. A cet effet, la rampe de guidage curviligne 18 surmontant ce dernier confère aux bouteilles 11, à cette extrémité avale 25, une trajectoire à composante transversale de manière à repousser ces dernières en direction du transporteur de sortie 24.

Par ailleurs, le transporteur intermédiaire 6 peut, éventuellement, être incliné dans le sens d'avance des bouteilles 11 pour assurer l'évacuation des bouteilles couchées et débris de verre en sortie dudit transporteur intermédiaire 6 et, plus exactement, au niveau du premier virage 19 du transporteur de transition 16 aboutant à son extrémité avale 20. On notera que l'écart respecté par la rampe de guidage 18 par rapport au plan des chaînes à palettes élémentaires 22, 23 sera prévu suffisant pour autoriser le passage des bouteilles couchées.

Une telle inclinaison dans le sens d'avance des bouteilles 11 du transporteur intermédiaire 6 remédie au problème que pose, dans certains cas, l'inclinaison dans un sens transversal. En effet, celle-ci est, généralement, à l'origine d'une probabilité de chute de bouteilles plus importante. De plus, les connexions avec le transporteur d'alimentation et le transporteur de sortie sont, fréquemment, plus complexes en raison de l'inclinaison qu'il convient, également, de conférer à ces derniers.

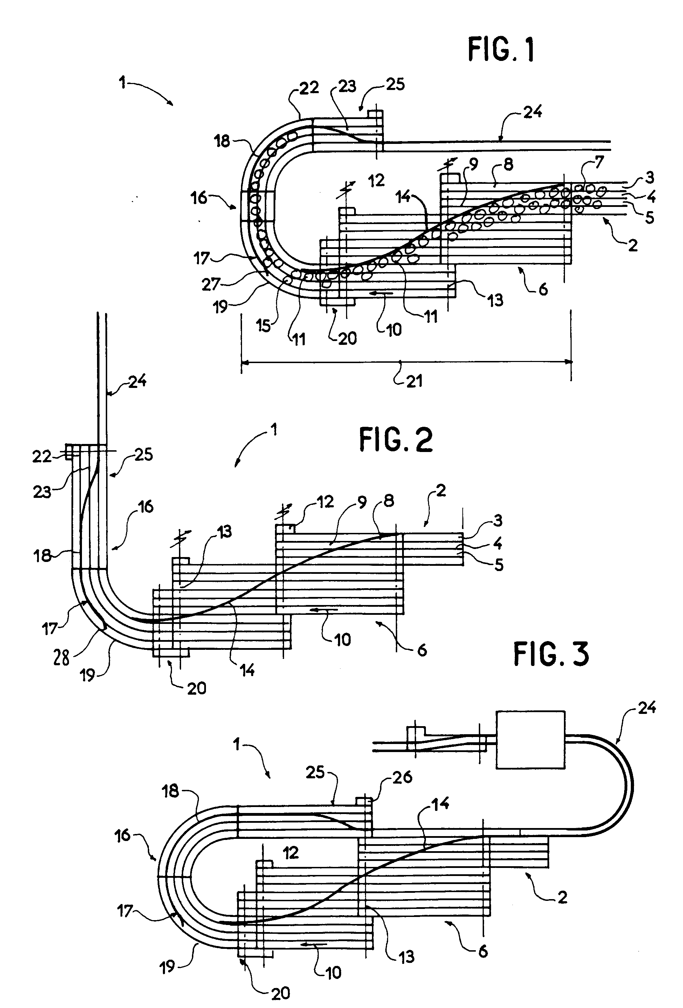

En ce qui concerne la configuration de cet aligneur sans pression 1, trois types différents sont représentés, respectivement, dans les figures 1, 2 et 3. Ainsi, dans la figure 1, le transporteur de sortie à voie unique 24 se présente, sensiblement, parallèle au transporteur d'alimentation 2. Dans le cadre de la figure 2, l'aligneur sans pression 1 adopte une configuration en forme de "L" conférant aux bouteilles, en sortie, une direction décalée d'un angle de 90° par rapport à l'entrée. Bien entendu, cet aligneur sans pression 1 pourra emprunter toutes les formes intermédiaires entre les positions représentées dans les figures 1 et 2. Ainsi, l'angle formé entre le transporteur d'alimentation 2 et le transporteur de sortie 24 peut être compris entre 90° et 180°. Toutefois, il s'est avéré qu'en se limitant à des valeurs de 130° à 180° on obtient des conditions de fonctionnement optimal de l'aligneur sans pression pour un encombrement réduit au minimum.

La solution représentée dans la figure 3 correspond à un sens d'alimentation et d'évacuation des bouteilles identiques. Dans ce cas, l'aligneur sans pression 1 emprunte la forme d'un "S", le transporteur de transition 16 et le transporteur de sortie à voie unique 24 étant recourbés, tous deux, à 180°.

On constate, ainsi, que l'aligneur sans pression 1, conforme à l'invention, est en mesure de s'adapter à tout type d' installation tout en respectant un encombrement réduit.

A cet effet, on notera la disposition particulière de cet aligneur sans pression, représenté dans la figure 3. Dans ce cas précis, on constate que le transporteur de sortie, à voie unique 24, composé, tel que sa dénomination l'indique, par une seule chaîne à palettes élémentaires, est juxtaposé aux différentes chaînes à palettes élémentaires 3, 4, 5 formant le transporteur intermédiaire 6. Cette disposition permet, d'une part, de diminuer l'encombrement dans le sens transversal de l'aligneur sans pression 1 et, d'autre part, d'assurer l'entraînement de certaines chaînes à palettes élémentaires du transporteur intermédiaire 6, du transporteur de transition 16 et celle du transporteur de sortie 24 par l'intermédiaire de moyens moteurs communs.

En dehors des objectifs visés, initialement, par l'aligneur sans pression, objet de la présente invention, à savoir réduire son encombrement général, il présente la caractéristique supplémentaire d'une adaptabilité facile en raison d'une configuration modulable.

## Revendications

1. Aligneur sans pression d'objets divers, tels que des bouteilles, comportant un transporteur d'alimentation (2) à voies (3, 4, 5) multiples, un transporteur intermédiaire (6) formé d'une pluralité de chaînes à palettes élémentaires (8, 9) juxtaposées et surmontées d'une rampe de guidage curviligne (14) et un transporteur de sortie à voie unique (24), ledit transporteur intermédiaire (6) débouchant sur un transporteur de transition (16) à trajectoire courbe et à deux voies au-moins, ce transporteur de transition (16) étant disposé en amont du transporteur de sortie (24) caractérisé par le fait que ledit transporteur de transition (16) est surmonté par une rampe de guidage curviligne (18) reprenant le guidage des bouteilles (11, 15) sur leur côté opposé par rapport au guidage s'effectuant sur le transporteur intermédiaire, ceci sensiblement au milieu et à l'extérieur du virage (19) défini par le transporteur de transition (16) à l'extrémité aval (20) dudit transporteur intermédiaire (6).

2. Aligneur sans pression selon la revendication 1, caractérisé par le fait que la rampe de guidage curviligne (18) surmontant le transporteur de transition (16), présente, à l'extrémité aval (25) de ce dernier, une configuration déterminée pour conférer aux bouteilles (11) une trajectoire à composante transversale et repousser celles-ci en direction du transporteur de sortie (24).

3. Aligneur sans pression selon la revendication 1, caractérisé par le fait que la rampe de guidage (18) présente son extrémité amont (27) sensiblement recourbée vers l'extérieur du virage (19).

4. Aligneur sans pression selon la revendication 1, caractérisé par le fait que le transporteur d'alimentation (2) et le transporteur de sortie (24 forment un angle variant entre 130° et 180°.

5. Aligneur sans pression selon la revendication 1, caractérisé par le fait qu'il emprunte une configuration en forme de "S", le transporteur de transition (16) et le transporteur de sortie à voie unique (24) étant recourbés, sensiblement, à 180°.

6. Aligneur sans pression selon les revendications 1 et 5, caractérisé par le fait que le transporteur de sortie à voie unique (24) ou l'extrémité aval (25) du transporteur de transition (16) est juxtaposé au transporteur intermédiaire (6) autorisant l'entraînement dudit transporteur de sortie à voie unique (24) ou de certaines chaînes à palettes élémentaires du transporteur de transition (16) et celles dudit transporteur intermédiaire (6) à l'aide de moyens moteurs communs.

7. Aligneur sans pression selon la revendication 1, caractérisé par le fait que le transporteur intermédiaire (6) est incliné dans le sens d'avance (10) des bouteilles (11).

## Claims

1. No-pressure aligner for different items, such as bottles, comprising a feed-in conveyer (2) with multiple tracks (3, 4, 5), an intermediate conveyer (6) formed of a plurality of juxtaposed elementary pallet chains (8, 9) topped with a curvilinear guiding ramp (14) and a single-track feed-out conveyer (24), said intermediate conveyer (6) ending onto a transition conveyer (16) with a curved path and at least two tracks, this transition conveyer (16) being arranged upstream of the feed-out conveyer (24), characterized in that said transition conveyer (16) is topped with a curvilinear guiding ramp (18) taking over the guiding of the bottles (11, 15) at their opposite side with respect to the guiding taking place on the intermediate conveyer, this substantially at the centre and at the outer side of the bend (19) defined by the transition conveyer (16) at the downstream end (20) of said intermediate conveyer (6).

2. No-pressure aligner according to claim 1, characterized in that the curvilinear guiding ramp (18) topping the transition conveyer (16) has, at the downstream end (25) of this latter, a configuration determined to impart to the bottles (11) a path with a transversal component and push same in direction of the feed-out conveyer (24).

3. No-pressure aligner according to claim 1, characterized in that the guiding ramp (18) has its upstream end (27) substantially bent towards the outer side of the bend (19).

4. No-pressure aligner according to claim 1, characterized in that the feed-in conveyer (2) and the feed-out conveyer (24) form an angle varying between 130° and 180°.

5. No-pressure aligner according to claim 1, characterized in that it adopts an S-shaped configuration, the transition conveyer (16) and the single-track feed-out conveyer (24) being substantially bent at 180°.

6. No-pressure aligner according to claim 1 and 5, characterized in that the single-track feed-out conveyer (24) or the downstream end (25) of the transition conveyer (16) is juxtaposed to the intermediate conveyer (6) authorizing the driving of said single-track feed-out conveyer (24) or some elementary pallet chains of the transition conveyer (16) and those of said intermediate conveyer (6) by common driving means.

7. No-pressure aligner according to claim 1, characterized in that the intermediate conveyer (6) is slanted in the feed-motion direction (10) of the bottles (11).

## Patentansprüche

1. Vorrichtung zum drucklosen Ausrichten von verschiedenen Gegenständen, wie Flaschen, umfassend einen Zuförderer (2) mit mehrfachen Bahnen (3, 4, 5), einen aus einer Mehrheit von mit einer bogenförmigen Führungsrampe (14) gekrönten, nebeneinanderliegenden Palettenketten (8, 9) gebildeten Zwischenförderer (6) und einen Einzelbahnabförderer (24), wobei der genannte Zwischenförderer (6) auf einen Übergangsförderer (16) mit einem bogenförmigen Weg und wenigstens zwei Bahnen endet, wobei dieser Übergangsförderer (16) stromaufwärts bezüglich des Abförderers (24) angeordnet ist, dadurch gekennzeichnet, daß der genannte Übergangsförderer (16) mit einer bogenförmigen Führungsrampe (18) gekrönt ist, die die Führung der Flaschen (11, 15) an deren der auf dem Zwischenförderer durchgeführten Führung gegenüberliegenden Seite und zwar im wesentlichen in der Mitte und an der Außenseite der vom Übergangsförderer (16) definierten Kurve (19) am stromabwärtsen Ende (20) des genannten Zwischenförderers (6) übernimmt.

2. Vorrichtung zum drucklosen Ausrichten nach Anspruch 1, dadurch gekennzeichnet, daß die bogenförmige Führungsrampe (18), mit der der Übergangsförderer (16) gekrönt ist, am stromabwärtsen Ende (25) dieses letzten eine Konfiguration aufweist, die so bestimmt ist, daß den Flaschen (11) einen Weg mit einer Querkomponente vermittelt wird und diese in Richtung des Abförderers (24) gedrückt werden.

3. Vorrichtung zum drucklosen Ausrichten nach Anspruch 1, dadurch gekennzeichnet, daß die Führungsrampe (18) ihr stromaufwärtses Ende (27) im wesentlichen zur Außenseite der Kurve (19) hin gebogen aufweist.

4. Vorrichtung zum drucklosen Ausrichten nach Anspruch 1, dadurch gekennzeichnet, daß der Zuförderer (2) und der Abförderer (24) einen Winkel bilden, der zwischen 130° und 180° liegt.

5. Vorrichtung zum drucklosen Ausrichten nach Anspruch 1, dadurch gekennzeichnet, daß sie eine S-förmige Konfiguration annimmt, wobei der Übergangsförderer (16) und der Einzelbahnabförderer (24) im wesentlichen um 180° gebogen sind.

6. Vorrichtung zum drucklosen Ausrichten nach Anspruch 1 und 5, dadurch gekennzeichnet, daß der Einzelbahnabförderer (24) oder das stromabwärtse Ende (25) des Übergangsförderers (16) neben dem Zwischenförderer (6) liegt, was den Antrieb des genannten Einzelbahnabförderer (24) oder gewisser Elementarpaletketten des Übergangsförderers (16) und derjenigen des genannten Zwischenförderers (6) über gemeinsame Antriebmittel erlaubt.

7. Vorrichtung zum drucklosen Ausrichten nach Anspruch 1, dadurch gekennzeichnet, daß der Zwischenförderer (6) in Vorschubrichtung (10) der Flaschen (11) geneigt ist.
